# FASCICULE DE BREVET EUROPEEN

(11) **EP 0 748 976 B1**
(45) Date de publication et mention de la délivrance du brevet: **23.08.2000**
(21) Numéro de dépôt: 96401109.2
(22) Date de dépôt: 22.05.1996
(51) Int. Cl.: F16L 55/00, F16L 39/00, B67D 5/32

(54) **Système de tuyauterie pour le remplissage en carburant liquide d'une cuve enterrée et pour le transfert de ce carburant vers un poste de distribution**
Rohrleitungssystem zum Füllen unterirdischer Behälter mit Kraftstoff und zum Fördern dieses Kraftstoffs zu einer Kraftstoffausgabeeinrichtung
Pipeline system for filling an underground storage tank with fuel and for delivering this fuel to a dispensing installation

(30) Priorité: 12.06.1995 FR 9506898
(43) Date de publication de la demande: 18.12.1996
(73) Titulaire: TOTAL RAFFINAGE DISTRIBUTION S.A., 92800 Puteaux (FR)
(72) Inventeur: Dupouy, Jean-Claude, 44320 Arthon-en-Retz (FR); Lallinec, Yannick, 29000 Quimper (FR); Mahin, Daniel, 37510 Savonnieres (FR)
(74) Mandataire: Jolly, Jean-Pierre

(56) Documents cités:
- WO-A-90/07674
- DE-A- 4 109 572

## Description

La présente invention concerne un système de remplissage en carburant liquide d'une cuve enterrée et de transfert de ce carburant vers au moins un poste de distribution.

On sait que, dans les stations-services, les carburants distribués aux automobilistes à l'aide de postes de distribution dits volucompteurs sont stockés dans des cuves de stockage enterrées, qui doivent répondre à des conditions très strictes de sécurité. Ces cuves sont alimentées en carburant, au moyen de camions citernes, à partir d'un poste d'alimentation, à la surface du sol, à l'aide d'une première tuyauterie dite de remplissage. Au poste d'alimentation est simplement disposée, la plupart du temps, l'extrémité libre de cette première tuyauterie, que l'on raccorde à la tuyauterie flexible de dépotage du camion-citerne.

Par ailleurs, la cuve de stockage est raccordée aux postes de distribution par de secondes tuyauteries dites d'aspiration.

Les premières et secondes tuyauteries de connexion sont en général enterrées sur des longueurs assez importantes, par exemple, entre 20 et 100 mètres, et sont constituées de tubes métalliques ou plus rarement de tubes rigides en polyéthylène. Plus récemment, en vue de protéger l'environnement des fuites possibles de carburant, il a été proposé d'utiliser des doubles tuyauteries, comprenant une conduite souple interne, dans laquelle circule le carburant, et une conduite externe, relativement rigide, disposée coaxialement à la conduite interne.

Afin de pouvoir recueillir les fuites éventuelles de carburant et procéder au changement des tronçons de la tuyauterie souple interne, une ou plusieurs chambres d'accès étanches, accessibles de l'extérieur à partir de trous d'homme, sont prévues sur le trajet de la double tuyauterie, la conduite externe étant interrompue au niveau des parois latérales de la chambre d'accès, avec des systèmes de récupération des fuites de carburant à cet emplacement, tandis que seuls deux tronçons de la tuyauterie interne, disposés bout à bout et raccordés entre eux, traversent la chambre d'accès et sont ainsi accessibles à des ouvriers (voir, par exemple, US-A-4 971 477).

Ces chambres d'accès imposent toutefois des travaux coûteux de terrassement et de maçonnerie. Elles perturbent en outre l'écoulement naturel des eaux de pluie dans le sous-sol de l'aire de la station-service concernée.

On connaît, par WO 90/07 674, un système souterrain de double tuyauterie, comprenant un conduit interne et un conduit externe et destiné à réunir l'orifice de sortie d'un réservoir souterrain à l'orifice d'alimentation d'un distributeur de fluide, par exemple d'un distributeur de carburant.

La présente invention s'intéresse à un système de double tuyauterie de ce type et elle vise à éliminer le recours aux chambres d'accès étanches et aux trous d'homme, par utilisation d'une tuyauterie double sur tout le trajet emprunté par le carburant, aussi bien depuis le poste d'alimentation jusqu'à la cuve enterrée que de cette dernière au(x) poste(s) de distribution.

A cet effet, l'invention a pour objet un système de remplissage en carburant liquide d'une cuve enterrée et de transfert de ce carburant vers au moins un poste de distribution, ce système comprenant la cuve, un poste d'alimentation à partir duquel la cuve peut être remplie en carburant liquide, le poste de distribution, un ensemble de canalisation interne souple dans lequel circule le carburant et un ensemble de canalisation externe souple enveloppant la canalisation interne, l'ensemble de canalisation externe étant continu et enveloppant suivant toute sa longueur la canalisation interne, sans interruption depuis le poste d'alimentation jusqu'à la cuve enterrée et/ou depuis cette cuve jusqu'au poste de distribution, ce système étant caractérisé en ce que la canalisation externe comprend des tronçons de tuyauterie souple, qui sont tous raccordés entre eux et/ou au poste d'alimentation, à la cuve enterrée, au poste de distribution ou encore à d'éventuels organes de connexion intermédiaires, par des pièces de jonction souples et étanches au carburant, et qui sont aptes à être séparés des organes contigus et à être repliés pour libérer un accès à la canalisation interne.

Il est ainsi possible d'accéder aisément à la canalisation interne pour récupérer les fuites éventuelles de carburant, procéder aux travaux de maintenance et remplacer certains tronçons de cette canalisation interne.

Les pièces de jonction souples et étanches au carburant pourront être constituées par des soufflets à pliage en accordéon.

Les tronçons de la canalisation externe pourront être raccordés aux pièces souples associées en engageant les extrémités de ces tronçons dans la pièce contiguë et en les en rendant solidaires à l'aide de colliers externes de serrage d'un type usuel.

De préférence, les tronçons souples de la canalisation externe auront un profil cannelé, afin de pouvoir interposer des joints d'étanchéité dans ces cannelures entre le soufflet et les extrémités des tronçons souples engagées à l'intérieur de celui-ci.

La canalisation externe allant du poste de distribution à la cuve enterrée est pourvue avantageusement d'un raccord tubulaire au niveau du conduit d'accès de ladite cuve, ledit raccord comprenant un piquage pour la détection et la récupération de fuites éventuelles provenant du tuyau interne.

En outre, la canalisation externe allant du poste d'alimentation à la cuve enterrée est pourvue avantageusement sur le conduit d'accès de ladite cuve enterrée d'une coupelle coaxiale rigide et comportant une partie cylindrique, que coiffe l'extrémité contiguë du tronçon associé de la canalisation externe, pour en être rendu solidaire par un simple collier de serrage conventionnel. La coupelle coaxiale comprend également un piquage pour la détection et la récupération de fuites éventuelles provenant du tuyau interne.

Le système conforme à l'invention présente donc l'avantage, du fait de la présence de deux canalisations sensiblement concentriques suivant tout le trajet suivi par le carburant, d'assurer une parfaite protection de l'environnement, sans nécessiter un recours à des chambres d'accès étanches, coûteuses et peu pratiques.
En outre, il est d'un montage facile et, du fait de l'utilisation de pièces souples de raccordement entre les tronçons de la canalisation externe, il se prête aisément à la détection et à la récupération des fuites éventuelles de carburant à l'extérieur de la canalisation interne, à l'entretien et au remplacement de cette dernière canalisation.

La canalisation interne pourra être constituée d'un complexe multicouche d'un type connu en soi, avec une couche externe en caoutchouc synthétique, et une ou plusieurs couches internes, dont l'une au moins est parfaitement imperméable au carburant liquide convoyé. Une canalisation de ce type est décrite par exemple dans la demande de brevet français N° 94 01447, du 9 Février 1994.

La canalisation externe est généralement constituée de matériau thermoplastique, par exemple de polyéthylène, ou de tout autre matériau approprié résistant au carburant, à l'humidité et aux agents cryptogéniques.

D'autres caractéristiques et avantages de l'invention apparaîtront dans la description détaillée qui va suivre, d'une forme de mise en oeuvre de celle-ci. Dans cette description, on se réfèrera aux dessins annexés, qui n'ont naturellement aucun caractère limitatif. Sur ces dessins :
La figure 1 est une vue schématique générale, partiellement en coupe, d'un ensemble d'alimentation en carburant d'une cuve enterrée et de transfert du carburant vers un appareil de distribution, utilisant un système de tuyauterie conforme à la présente invention ;
La figure 2 est une vue à plus grande échelle, partiellement en coupe, de la partie de la tuyauterie d'alimentation de la cuve, contiguë au poste d'alimentation en carburant à partir d'un camion-citerne ;
La figure 3 est une vue analogue à la figure 2 de la partie de la tuyauterie d'alimentation de la cuve raccordée à celle-ci ;

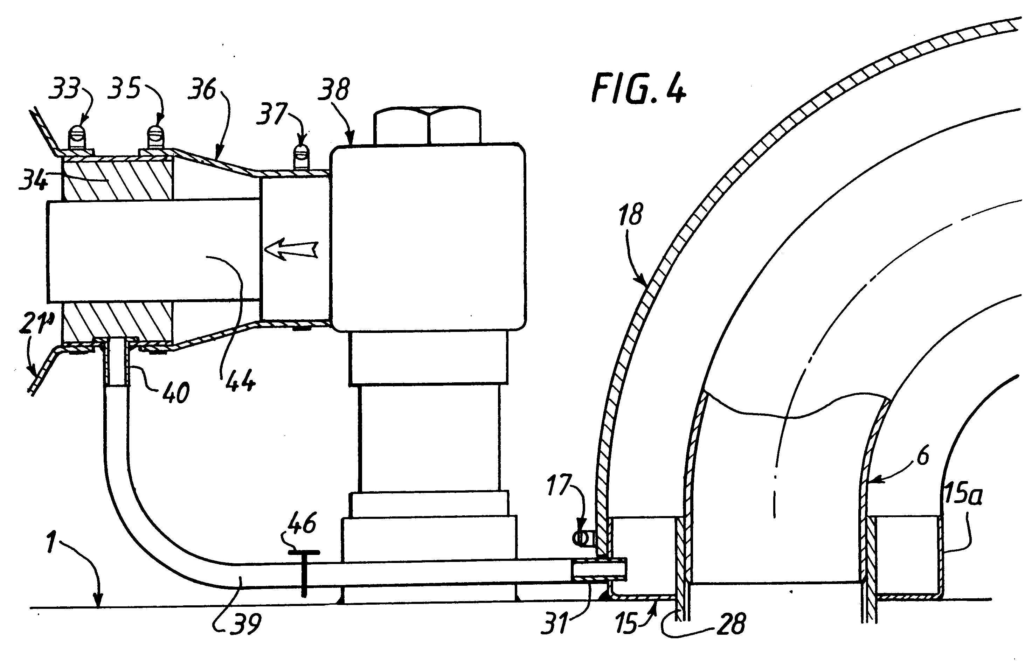

La figure 4 est une vue des moyens de détection et de récupération des produits à l'extrémité des tuyauteries externes et internes raccordée à la cuve enterrée ;
La figure 5 est une vue de la tuyauterie d'évacuation et de récupération potentielle des produits depuis le volucompteur.

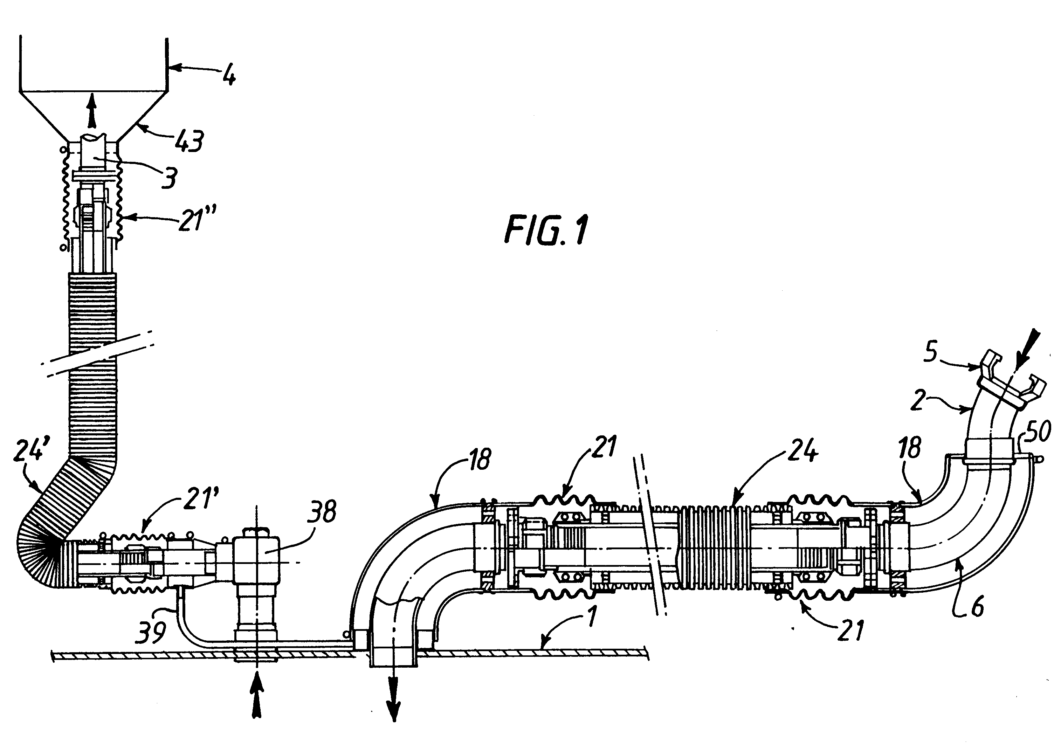

On se réfèrera d'abord à la vue générale de la figure 1.

Sur cette figure est représentée une citerne enterrée 1, que l'on désire pouvoir alimenter périodiquement en carburant, généralement par gravité, à l'aide de camions-citernes, à partir d'un manchon de remplissage 2, disposé à la surface du sol, en un emplacement prédéterminé d'un poste d'approvisionnement, en vue de transférer le carburant stocké vers le conduit d'alimentation 3 d'un volucompteur 4, par aspiration ou refoulement (pompes non représentées).

La cuve 1 et le manchon 2, d'une part, la cuve 1 et le conduit 3, d'autre part, sont réunis respectivement par une canalisation interne de convoyage du carburant, constituée de divers éléments raccordés entre eux de façon étanche, qui seront décrits ci-après plus en détail, et chaque canalisation interne est protégée extérieurement, suivant toute sa longueur, par une canalisation externe, également constituée de divers éléments raccordés entre eux de façon étanche, qui seront aussi décrits ci-après plus en détail, mais qui, selon une caractéristique essentielle de l'invention, ne comporte aucune interruption depuis le poste d'alimentation en carburant jusqu'à la cuve 1 et depuis cette cuve jusqu'au poste de distribution du carburant.

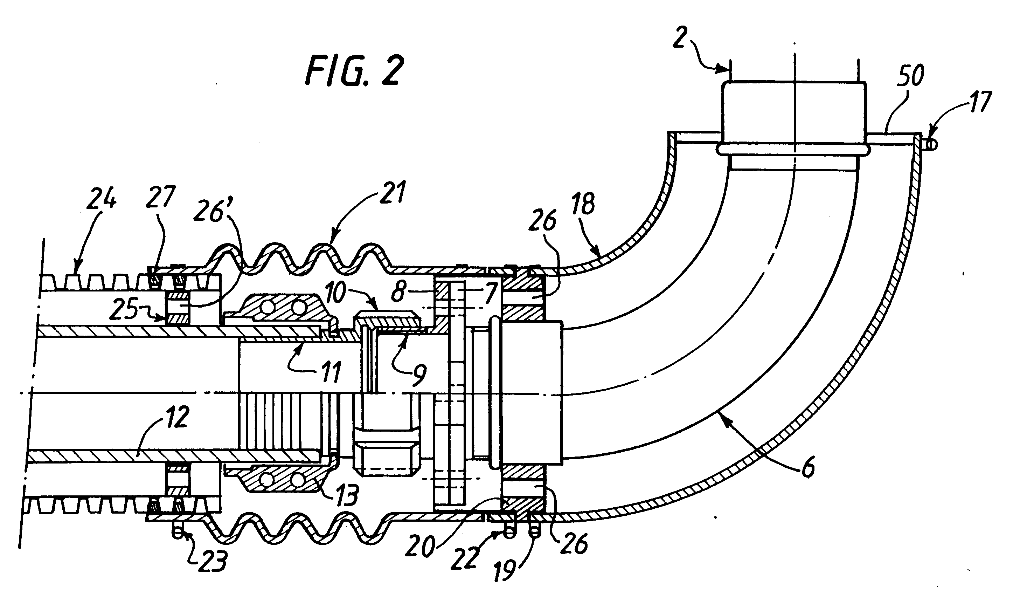

Le manchon de remplissage 2 est un conduit muni à son extrémité libre d'une bague 5 de raccordement. Selon la figure 2, ce manchon 2 est connecté à une partie tubulaire coudée 6, qui comporte à son autre extrémité une contrebride mâle 7, solidaire par des boulons et des écrous, non représentés, d'une contrebride mâle 8 comprenant une partie tubulaire 9. Les contrebrides 7 et 8 peuvent être désolidarisées pour la maintenance ou le remplacement de la tuyauterie interne. A la partie tubulaire 9 est raccordée une partie femelle 10, se prolongeant par une partie tubulaire 11, engagée dans un tronçon 12 de la canalisation souple proprement dite. Deux demi-coquilles 13, assemblées par des vis, enserrent les portions accouplées des parties 11 et 12, en vue d'assurer leur parfaite étanchéité.

Une bague 50 est fixée coaxialement à l'extrémité du manchon 2 pour assurer une parfaite étanchéité et, sur ledit manchon 2, est fixée à l'aide d'un collier de serrage 17 une première partie 18 d'une canalisation externe souple, coaxiale à la partie coudée 6. L'extrémité aval de cette partie 18, dans le sens de la circulation du carburant, est fixée à l'aide d'un collier 19 de serrage sur un raccord 20 percé de trous 26, et se prolonge par un soufflet 21 à pliage en accordéon, repliable sur lui-même, dont l'extrémité amont est fixée par un collier de serrage 22 sur ledit raccord percé 20 et dont l'extrémité aval est fixée par un collier de serrage 23 sur une canalisation externe souple 24. La canalisation 24 est coaxiale à la canalisation 12, avec interposition, au moins entre les extrémités aval et amont de ces canalisations, d'une bague 25, percée de trous 26, destinée comme le raccord 20 à centrer les canalisations l'une par rapport à l'autre, tout en laissant passer les fuites éventuelles de carburant.

La canalisation 24 a un profil externe cannelé et des joints toriques d'étanchéité 27 sont logés dans les cannelures externes au-dessous de l'extrémité correspondante du soufflet 21, en vue d'être comprimés par celui-ci.

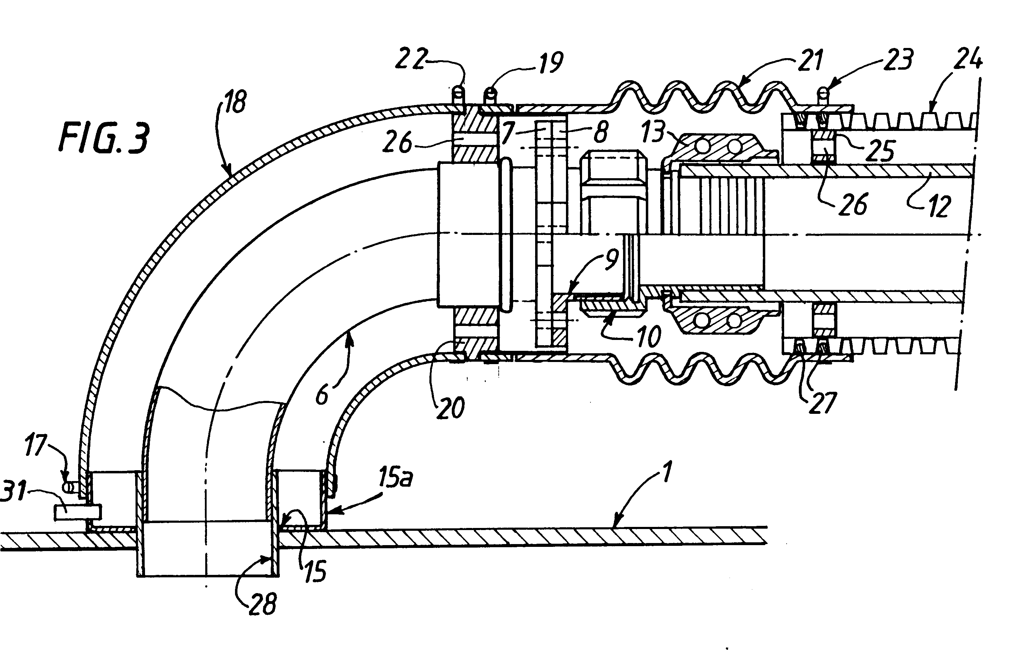

A l'extrémité aval des canalisations 12 et 24, on retrouve un système de raccordement à la cuve 1, qui est représenté en détail sur la figure 3, où les organes déjà décrits sont désignés par les mêmes chiffres de référence. L'extrémité aval de la partie tubulaire coudée 6 est ici raccordée à un tronçon de tube 28 pénétrant dans la cuve 1.

Coaxialement au tube 28 est disposée une coupelle 15 munie d'un piquage 31 dont le rôle apparaîtra ci-après. La partie cylindrique 15a de cette coupelle est coiffée par l'extrémité aval de la partie 18 de la canalisation externe et en est rendue solidaire par un collier de serrage 17.

On notera que les canalisations 12 et 24 ont été décrites comme comportant une unique tuyauterie, mais elles peuvent naturellement être constituées de plusieurs tronçons de conduits raccordés entre eux par tout moyen connu dans la technique, y compris ceux décrits présentement pour les raccordements entre les extrémités des tuyaux et les conduits d'accès des postes de distribution et d'alimentation.

Pour récupérer les fuites éventuelles de carburant, vérifier l'étanchéité de la canalisation interne et/ou remplacer éventuellement la canalisation interne 12, il suffit de désolidariser l'un et/ou l'autre des soufflets 21 de la canalisation 24 pour avoir accès à la canalisation 12, et il n'est donc plus nécessaire, comme dans la technique antérieure, d'avoir recours à des tranchées ou à des chambres d'accès enterrées, séparant des tronçons distincts et séparés de la tuyauterie externe.

En aval de la cuve 1, entre celle-ci et le poste de distribution, on retrouve un système de canalisation interne et de canalisation externe analogue à celui qui vient d'être décrit pour le circuit de remplissage de la citerne 1. Les mêmes chiffres de référence que précédemment sont utilisés pour désigner des organes similaires. On notera que la canalisation externe comprend, dans ce cas, deux soufflets 21' et 21", et un tronçon de conduite externe 24'. Le soufflet 21 est raccordé par un collier de serrage 33 sur un raccord tubulaire 34, équipé d'un piquage 40 et sur lequel est fixé, par un collier de serrage 35, un manchon souple 36. Ce dernier est raccordé par un collier 37 à la tête 38 d'évacuation de carburant de la cuve 1. Le raccord tubulaire entoure l'extrémité tubulaire 44 de la tête 38, cette dernière étant fixée sur la cuve 1 et comportant un clapet de retenue . A titre d'alternative, le clapet de retenue peut se situer au niveau du poste de distribution.

Un tube (non représenté) plongeant dans le carburant de la cuve 1 débouche sous la forme de l'éxtrémité tubulaire 44 à l'extérieur de la tête 38 et est raccordé de la façon précédemment décrite à la canalisation externe 12.

Le piquage 40 est raccordé à une durite 39 reliée au piquage 31. Sur son parcours, la durite 39 est équipée d'un robinet de contrôle 46 pour permettre facilement la détection et la récupération de fuites éventuelles.

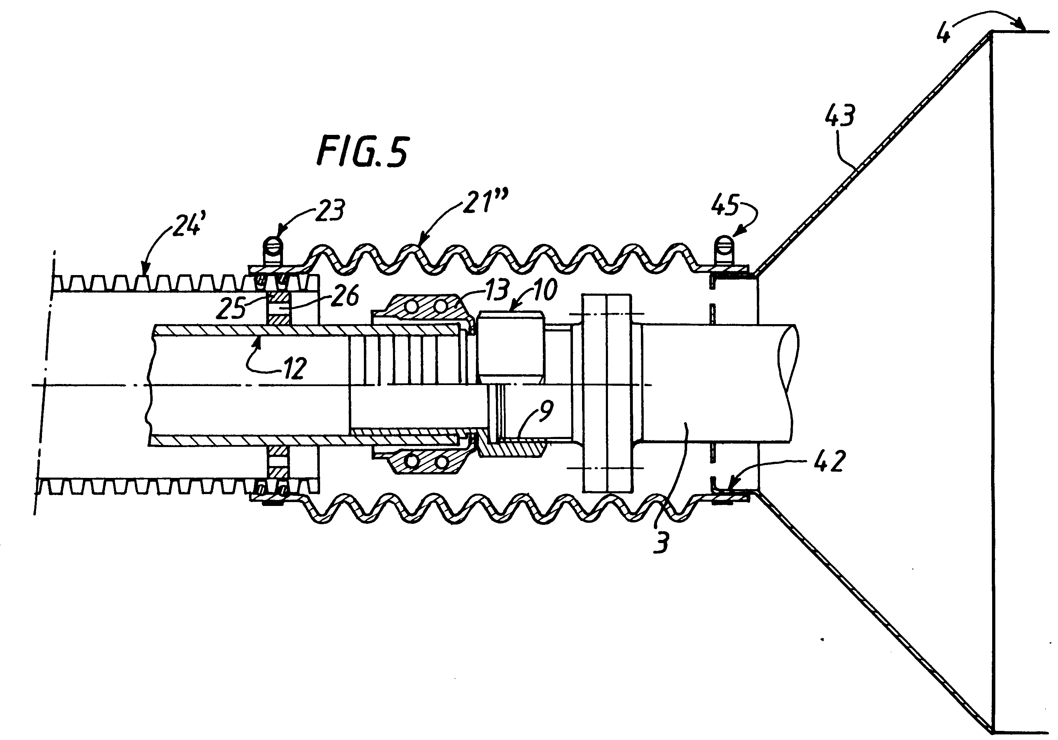

En se référant à la figure 5, on notera que la coupelle 42 à laquelle le soufflet 21''1 est raccordé en étant serré par l'intermédiaire d'un collier 45, comprend une base perforée. Cette coupelle 42 a une forme évasée et est située sous le volucompteur pour récupérer éventuellement les fluides de ce dernier.

L'invention apporte donc un système de protection de l'environnement particulièrement efficace dans son utilisation dans les installations de carburant, facile à mettre en oeuvre et d'un coût réduit par rapport aux infrastructures usuelles.

## Revendications

1. Système de remplissage en carburant liquide d'une cuve (1) enterrée et de transfert de ce carburant vers au moins un poste de distribution (4), ce système comprenant la cuve (1), un poste d'alimentation (2) à partir duquel la cuve (1) peut être remplie en carburant liquide, le poste de distribution (4), un ensemble de canalisation interne souple (12), dans lequel circule le carburant, et un ensemble de canalisation externe souple (24, 24') enveloppant la canalisation interne, l'ensemble de canalisation externe étant continu et enveloppant suivant toute sa longueur la canalisation interne, sans interruption depuis le poste d'alimentation (2) jusqu'à la cuve enterrée (1) et/ou depuis cette cuve (1) jusqu'au poste de distribution (4), ce système étant caractérisé en ce que l'ensemble de canalisation externe comprend des tronçons (24, 24') de tuyauterie souple qui sont tous raccordés entre eux et/ou au poste d'alimentation (2), à la cuve enterrée (1), au poste de distribution (4) ou à des organes de connexion intermédiaires par des pièces de jonction (21, 21', 21'') souples et étanches au carburant, et qui sont aptes à être séparés des organes contigus et à être repliés pour libérer un accès à l'ensemble de canalisation interne souple (12).

2. Système selon la revendication 1, caractérisé en ce que certaines au moins des pièces de jonction sont constituées par des soufflets (21, 21', 21''), à pliage en accordéon.

3. Système selon l'une des revendications 1 et 2, caractérisé en ce que les tronçons souples (24, 24') de l'ensemble de canalisation externe sont engagés dans les extrémités contiguës des soufflets (21, 21', 21'') associés et en sont rendus solidaires par des systèmes de colliers (23) de serrage.

4. Système selon la revendication 3, dans lequel les tronçons souples (24, 24') de l'ensemble de canalisation externe comportent des cannelures dans des plans sensiblement perpendiculaires à leur axe, caractérisé en ce que des bagues d'étanchéité (27) sont interposées entre les parties se recouvrant des tronçons (24, 24') et des soufflets (21, 21', 21'') contigus et sont engagées dans les cannelures des tronçons (24).

5. Système selon l'une des revendications 1 à 4, caractérisé en ce que la canalisation externe (24), allant du poste d'alimentation à la cuve enterrée (1), est pourvue au niveau du conduit d'accès à ladite cuve d'une coupelle coaxiale rigide (15), dont une partie cylindrique (15a) est coiffée par l'extrémité contiguë de l'extrémité correspondante de l'ensemble de canalisation externe, qui en est rendu solidaire par un collier de serrage.

6. Système selon l'une des revendications 1 à 5, caractérisé en ce que l'extrémité amont de la canalisation externe réunissant la cuve enterrée (1) et le poste de distribution (4) communique avec la coupelle (15) par l'intermédiaire d'un piquage (40) disposé de façon telle que les fuites éventuelles de carburant de la canalisation interne correspondante soient évacuées par gravité vers ladite coupelle (15).

7. Système selon la revendication 6, caractérisé en ce que le piquage (40) est relié à la coupelle (15) par une durite (39) équipée d'un robinet de contrôle.

8. Système selon l'une des revendications 5 et 6, caractérisé en ce que l'extrémité aval de la canalisation externe, réunissant le poste de distribution (4) à la cuve enterrée (1) est connectée à une coupelle évasée (42) disposée au-dessous du poste de distribution et apte à recueillir les fuites éventuelles de carburant.

## Patentansprüche

1. System zur Befüllung eines in die Erde eingelassenen bzw. versenkten Behälters (1) mit flüssigem Treibstoff, und zur Überführung dieses Treibstoffs in wenigstens eine Verteilerstation (4), wobei dieses System umfaßt den Behälter (1), eine Speise- bzw. Zufuhrstation (2), von welcher aus der Behälter (1) mit flüssigem Treibstoff befüllt werden kann, die Verteilerstation (4), ein Aggregat einer biegsamen Innenleitung (12), in welcher der Treibstoff fließt, sowie ein Aggregat einer die Innenleitung umgebenden biegsamen Außenleitung (24, 24'), wobei das Außenleitungsaggregat unterbrechungsfrei durchgehend ist und über ihre gesamte Länge die Innenleitung umhüllt, ohne Unterbrechung von der Speise- bzw. Zufuhrstation (2) bis zu dem versenkten Behälter (1) und/oder von diesem Behälter (1) bis zur Verteilerstation (4),
**dadurch gekennzeichnet,** daß
das Außenleitungsaggregat biegsame Rohrleitungsabschnitte (24, 24') umfaßt, die sämtlich miteinander und/oder mit der Speise-bzw. Zufuhrstation (2), dem versenkten Behälter (1), der Verteilerstation (4) und zwischengeschalteten Verbindungsorganen durch biegsame und treibstoffdichte Verbindungsstücke (21, 21', 21") verbunden sind und die von den angrenzenden Organen getrennt und zurückgefaltet werden können, um einen Zugang zu dem biegsamen Innenleitungsaggregat (12) freizugeben.

2. System nach Anspruch 1, dadurch gekennzeichnet, daß wenigstens bestimmte unter den Verbindungsstücken von Faltbälgen (21, 21', 21'') mit Ziehharmonikafaltung gebildet werden.

3. System nach einem der Ansprüche 1 und 2, dadurch gekennzeichnet, daß die biegsamen Abschnitte (24, 24') des Außenleitungsaggregats mit den angrenzenden Enden der zugeordneten Faltbalgen (21, 21', 21'') in Eingriff stehen und mit ihnen durch Klemmschellensysteme (23) verbunden sind.

4. System nach Anspruch 3, bei welchem die biegsamen Abschnitte (24, 24') des Außenleitungsaggregats Kannelierungen in zu ihrer Achse im wesentlichen rechtwinkligen Ebenen aufweisen, dadurch gekennzeichnet, daß zwischen den sich überlappenden Teilen der Abschnitte (24, 24') und der angrenzenden Faltbalgen Dichtungsringe (27) vorgesehen sind und in Eingriff mit den Kannelierungsrillen der Abschnitte (24) stehen.

5. System nach einem der Ansprüche 1 bis 4, dadurch gekennzeichnet, daß die von der Speise- bzw. Zufuhrstation zu dem versenkten Behälter (1) führende Außenleitung (24) auf dem Niveau der Zutrittsleitung zu dem Behälter mit einer koaxialen starren Kupelle bzw. Auffangschale (15) versehen ist, von welcher ein zylindrisches Teil von dem angrenzenden Ende des entsprechenden Endes des Außenleitungsaggregats überkappt ist, das mit ihm durch eine Klemmschelle fest verbunden ist.

6. System nach einem der Ansprüche 1 bis 5, dadurch gekennzeichnet, daß das stromaufwärtige Ende der den versenkten Behälter (1) und die Verteilerstation (4) verbindenden Außenleitung mit der Kupelle bzw. Auffangschale (15) über eine Stichabzweigung (40) in Verbindung steht, die so angeordnet ist, daß eventuell aus der entsprechenden Innenleitung ausleckender Treibstoff durch Schwerkraft zu der genannten Kupelle bzw. Auffangschale (15) abgeführt wird.

7. System nach Anspruch 6, dadurch gekennzeichnet, daß die Stichabzweigung (40) mit der Kupelle (15) über eine mit einem Kontroll-Zapfventil versehene Leitung verbunden ist.

8. System nach einem der Ansprüche 5 und 6, dadurch gekennzeichnet, daß das stromabwärtige Ende der die Verteilerstation (4) mit dem versenkten Behälter (1) verbindenden Außenleitung mit einer sich erweiternden Kupelle bzw. Auffangschale (42) verbunden ist, die unterhalb der Verteilerstation angeordnet ist und eventuellen Lecktreibstoff aufsammeln kann.

## Claims

1. A system for filling an underground tank (1) with liquid fuel and transferring said fuel to at least one dispensing installation (4), said system comprising the tank (1), a feed installation (2) from which the tank may be filled with liquid fuel, the dispensing installation (4), a flexible inner pipeline assembly (12), in which the fuel circulates, and a flexible outer pipeline assembly (24, 24') enclosing the inner pipeline, the outer pipeline assembly being continuous and enclosing the inner pipeline over its entire length, without interruption, from the feed installation (2) to the underground tank (1) and/or from this tank (1) to the dispensing installation (4), said system being characterised in that the outer pipeline assembly comprises sections (24, 24') of flexible tubing which are all connected to one another and/or to the feed installation (2), the underground tank (1), the dispensing installation (4) or intermediate connecting members by flexible, fuel-tight junction pieces (21, 21', 21") and which are capable of being separated from the adjoining members and of being folded back to allow access to the flexible inner pipeline assembly (12).

2. A system according to claim 1, characterised in that certain at least of the junction pieces consist of concertina-folded bellows (21, 21', 21").

3. A system according to one of claims 1 and 2, characterised in that the flexible sections (24, 24') of the outer pipeline assembly are engaged in the adjoining ends of the associated bellows (21, 21', 21") and are connected firmly therewith by systems of clamps (23).

4. A system according to claim 3, in which the flexible sections (24, 24') of the outer pipeline assembly comprise grooves in planes substantially perpendicular to the axes thereof, characterised in that gaskets (27) are interposed between the overlapping parts of the sections (24, 24') and of the adjoining bellows (21, 21', 21") and are engaged in the grooves of the sections (24).

5. A system according to one of claims 1 to 4, characterised in that the outer pipeline (24), extending from the feed installation to the underground tank (1), is provided, at the level of the access duct to said tank, with a rigid coaxial sump (15), of which a cylindrical portion (15a) is covered by the contiguous end of the corresponding end of the outer pipeline assembly, which is firmly connected therewith by a clamp.

6. A system according to one of claims 1 to 5, characterised in that the upstream end of the outer pipeline connecting the underground tank (1) and the dispensing installation (4) communicates with the sump (15) through the intermediary of a connection piece (40) disposed in such a way that any fuel leaking from the corresponding inner pipeline is drained by gravity towards said sump (15).

7. A system according to claim 6, characterised in that the connection piece (40) is connected to the sump (15) by a hose (39) provided with a test cock.

8. A system according to one of claims 5 and 6, characterised in that the downstream end of the outer pipeline connecting the dispensing installation (4) to the underground tank (1) is connected to a flared sump (42) disposed beneath the dispensing installation and capable of collecting any fuel leaks.
